# EUROPÄISCHE PATENTSCHRIFT

(11) **EP 0 860 382 B1**
(45) Veröffentlichungstag und Bekanntmachung des Hinweises auf die Patenterteilung: **07.04.2004**
(21) Anmeldenummer: 97121956.3
(22) Anmeldetag: 12.12.1997
(51) Int. Cl.: B65G 1/137, B65G 1/04, B65G 47/51

(54) **Kommossionierverfahren sowie Kommissionieranlage zur Durchführung des Verfahrens**
Commissioning method and commissioning device therefore
Procédé pour la préparation de commandes et dispositif pour la préparation de commandes pour la réalisation du procédé

(30) Priorität: 30.01.1997 DE 29701565 U; 26.03.1997 DE 19712839
(43) Veröffentlichungstag der Anmeldung: 26.08.1998
(73) Patentinhaber: WITRON Logistik & Informatik GmbH, 92711 Parkstein (DE)
(72) Erfinder: Winkler, Walter, 92711 Parkstein (DE)
(74) Vertreter: Betten & Resch

(56) Entgegenhaltungen:
- EP-A- 0 099 340
- DE-A- 4 306 469
- DE-U- 29 507 991
- PATENT ABSTRACTS OF JAPAN vol. 016, no. 366 (M-1291), 7.August 1992 & JP 04 116001 A (ITOKI KOSAKUSHO CO LTD), 16.April 1992,
- LIMMER G: "AUTOMATED SMALL PARTS STORE WITH MODULAR MATERIAL FLOW COMPONENTS" ENGINEERING AND AUTOMATION, Bd. 17, Nr. 6, 1.November 1995, Seite 12/13 XP000558691

## Beschreibung

Die Erfindung betrifft ein Verfahren zum Kommissionieren in einer Kommissionieranlage mit einem Behälterlager, mit Fördereinrichtungen zum Transport der Behälter aus dem Behälterlager zu einer Mehrzahl von Kommissionier-Arbeitsplätzen, und mit einem zwischen dem Behälterlager und den Arbeitsplätzen vorgesehenen Verteilsystem zum Verteilen der Behälter auf die einzelnen Arbeitsplätze. Weiterhin betrifft die Erfindung eine Kommissionieranlage zur Durchführung des Kommissionierverfahrens sowie einen Sortierpuffer für eine solche Kommissionieranlage.

Soweit vorstehend und im folgenden von "Behältern" die Rede ist, soll dies nicht einschränkend verstanden werden; vielmehr umfaßt die vorliegende Erfindung auch solche Systeme, in denen andere Transporteinheiten wie beispielsweise Tabletts verwendet werden, um das Kommissioniergut zu lagern und zu transportieren.

Aus Limmer, Engineering and Automation, 17 (1995), S. 12, 13 ist ein automatisches Lagersystem für Kleinteile bekannt, bei dem zwischen einer Verteilstation und einem Kommissionierplatz ein in beide Richtungen bewegbares Transportband vorgesehen ist, das als Sortierpuffer dient. Mittels einer Querfördereinrichtung kann auf das auf dem Pufferband zwischengespeicherte Lagergut zugegriffen werden. Aufgrund der horizontalen Lagerung auf dem Sortierband ist der Platzbedarf zum Puffern groß und die Zugriffszeiten vergleichsweise lang.

Aus der Offenlegungsschrift DE 4306469 A1 ist ein Regallager bekannt, das eine vertikal bewegbare Hubbühne sowie eine Umsetzvorrichtung aufweist, die durch mehrfachtiefe Lagerung eine effiziente Ausnutzung des Lagervolumens sowie eine automatische Ein- und Auslagerung ermöglicht.

Aus der JP-A-04-116001 (Patent Abstracts of Japan) ist ein Kleinteilelager mit einem als Rollenlager ausgebildeten Ausgabepuffer beschrieben. Bei jedem Zugriff auf den Ausgabepuffer müssen alle darin gelagerten Container mitbewegt werden.

Gemäß einem bekannten Stand der Technik werden die Behälter einem Behälterlager entnommen, über Transportstrecken einem zentralen Verteilsystem zugeführt und vom Verteilsystem in der gewünschten Reihenfolge über weitere Transportwege den jeweiligen Arbeitsplätzen zugeführt. Die jeweils erforderliche Reihenfolge, in der die Behälter am Arbeitsplatz eintreffen, ergibt sich hierbei durch die Reihenfolge der Entnahme der Behälter aus dem Behälterlager, beispielsweise mittels Regalfahrzeugen. Desweiteren kann auch dem Verteilsystem eine Sortierfunktion beibemessen werden, nachdem das Verteilsystem im wesentlichen als kreisförmig geschlossene Umlaufbahn ausgebildet ist.

Der Erfindung liegt im wesentlichen die Aufgabe zugrunde, das bekannte Verfahren effizienter zu gestalten.

Die Lösung dieser Aufgabe besteht in der Verfahren gemäß Patentanspruch 1.

Hierbei ist es besonders vorteilhaft, wenn die Behälter gemäß einem weiteren Merkmal der Erfindung aus dem Behälterlager hinsichtlich ihrer späteren, an den Arbeitsplätzen benötigten Reihenfolge ungeordnet ausgelagert werden; in diesem Fall kann gemäß einem weiteren Merkmal der Erfindung die Auslagerung der Behälter aus dem Behälterlager hinsichtlich der Auslagerleistung maximiert wird, wodurch sich ein besonders wirtschaftliches Verfahren ergibt.

Die erfindungsgemäße Kommissionieranlage zur Durchführung des erfindungsgemäßen Verfahrens umfaßt die Merkmale gemäß Patentanspruch 3. Vorzugsweise weist der Sortierpuffer Mittel zur Steuerung des Sortierpuffers auf.

Aufgrund der Erfindung ist es möglich, daß die vom Behälterlager zugeführten Artikel-Behälter zunächst unsortiert dem Verteilsystem und den vom Verteilsystem zu den Arbeitsplätzen führenden Transportwegen zugeführt werden können, wobei die richtige Reihenfolge und die richtige Menge der für jeden Arbeitsplatz relevanten Transporteinheiten individuell für jeden Arbeitsplatz zwischen dem Verteilsystem und dem jeweiligen Arbeitsplatz festgelegt wird. Die erfindungsgemäß vorgesehenen, jedem einzelnen Arbeitsplatz zugeordneten Sortiereinheiten können die verschiedenen Artikel-Behälter somit unsortiert aufnehmen, zwischenpuffern und anschließend folgerichtig an den Arbeitsplatz weiterleiten. Die primäre Funktion dieser Sortier- und Puffer-Einrichtung, im folgenden "Sortierpuffer" genannt, liegt somit bei der Sortierfunktion, die durch den wahlfreien Zugriff auf jeden Transportbehälter des Sortierpuffers ermöglicht wird. Darüber hinaus kommt dem Sortierpuffer auch noch die Funktion einer Pufferung der Transportbehälter zu.

Ein wesentlicher Vorteil der Erfindung besteht darin, daß zur Abarbeitung von Kundenaufträgen die Voraussetzung gegeben ist, diese Aufträge in einer bestimmten Reihenfolge zu bearbeiten, die erforderlichen Lagerbehälter (Artikelbehälter) aus allen Gassen für einen kompletten Auftrag in einer Reihe an einem Kommissionierplatz bereitzustellen und innerhalb dieser Behälteranzahl eine bestimmte Reihenfolge einzuhalten, ohne daß die Zusammenführung bzw. die Reihenfolgenbildung dieser Behälter im Bereich des Behälterlagers bzw. des Verteilsystems zu erfolgen hat. Dadurch ist gewährleistet, daß die installierte Leistung der Regalfahrzeuge voll genutzt werden kann. Insbesondere kann der Betrieb des Behälterlagers nunmehr so gesteuert werden, daß ohne Rücksicht auf eine am jeweiligen Arbeitsplatz erforderliche Reihenfolge eine maximale Auslagerleistung erzielt wird. Hierdurch wiederum läßt sich die Auslastung der Regalfahrzeuge hinsichtlich der Ein- und Auslagerleistung von Behältern erhöhen, wodurch einerseits die Versorgungsleistung von Lagerbehältern an den Kommissionier-Arbeitsplätzen gesteigert werden kann bzw. andererseits die Anlage mit einer geringeren Anzahl von Regalfahrzeugen auskommen kann, wodurch erhebliche Kosten eingespart werden können.

Steigende Auftragszahlen und damit verbundene sinkende Abnahmemengen sowie geringe Auftragszeiten erfordern einen erhöhten Handlingsaufwand bei der Bearbeitung von Aufträgen in automatisierten Kommissionieranlagen der hier in Rede stehenden Art. Dieser Handlingsaufwand spiegelt sich beispielsweise in der Einhaltung einer bestimmten Bereitstellungsreihenfolge der Lagerbehälter (Artikelbehälter) für einen Kommissioniervorgang wieder. Gründe hierfür sind:
- Der Kunde möchte die Ware in einer bestimmten Reihenfolge auf der Palette oder im Paket haben, um die jeweiligen Artikel nacheinander entnehmen zu können.
- Leichte und zerbrechliche Waren müssen zuletzt bzw. oben auf die Palette oder in das Paket gelegt werden.

Mit Hilfe des erfindungsgemäßen Verfahrens bzw. der erfindungsgemäßen Anlage wird die Konsolidierung und Sortierung der einzelnen Artikel für einen Auftrag erleichtert und kann hochflexibel gestaltet werden. Insbesondere ergeben sich für den Anwender durch den Einsatz der vorliegenden Erfindung folgende Vorteile und Nutzen:
- hohe Versorgungsleistung mit Lagerbehältern an den Kommissionierplätzen durch erhöhte Auslastung der Regalfahrzeuge, die bei der Auslagerung der Behälter aus dem Lagersystem an keine bestimmte Reihenfolge mehr gebunden sind
- wahlfreier Zugriff auf die Behälter
- wahlfreie Sortierung der Behälter
- flexible Zuführung von Behälter
- optimale Versorgung von Arbeitsplätzen
- Pufferung von Behälter

Bei dem Sortierpuffer sind in bevorzugter Weiterbildung der Erfindung die Stellplätze insbesondere in zwei sich gegenüberstehenden Türmen übereinanderliegend angeordnet und die Bedieneinheit des Sortierpuffers umfaßt ein vertikal bewegliches Aufnahmemittel, das zwischen den beiden Türmen angeordnet ist und somit jeden einzelnen der Stellplätze individuell bedienen kann.

Vorteilhaft ist es auch, wenn die Stellflächen der Stellplätze des Sortierpuffers von der Bedieneinheit weg geneigt sind und vorzugsweise mit Röllchenleisten und mit einem geeigneten Anschlag versehen sind. Hierbei wird der Behälter von der Bedieneinheit des Sortierpuffers bis zum Stellplatz befördert und der Behälter gleitet dann aufgrund der Neigung der Stellfläche selbsttätig in seine Zwischenlager-Position, in welcher er an dem Anschlag anschlägt. Die Röllchenleisten o.dgl. erleichtern und beschleunigen das Gleiten der Behälter.

Der Sortierpuffer ermöglicht äußerst kurze Zugriffszeiten auf die einzelnen Stellplätze, wobei Spielzeiten von ca. 200 Doppelspielen erreichbar sind.

Gemäß einem weiteren vorteilhaften Merkmal der Erfindung weist die Bedieneinheit des Sortierpuffers eine Grundposition auf, in der sie die Einlagerstrecke und die Auslagerstrecke des Sortierpuffers überbrückt. Ist die Auslagerstrecke in Verlängerung der Einlagerstrecke angeordnet, was eine zweckmäßige Anordnung darstellen wird, so befindet sich diese Grundposition der Bedieneinheit genau zwischen Einlagerstrecke und Auslagerstrecke. Aufgrund dieses Merkmals ist es möglich, auf eine Zwischenlagerung eines Behälters im Sortierpuffer gegebenenfalls verzichten zu können, falls ein Behälter für einen bestimmten Auftrag sofort benötigt wird. Das Lastaufnahmemittel der Bedieneinheit dient in diesem Fall als überbrückende Förderstrecke zwischen Einlager- und Auslagerstrecke. Der Behälter wird von der Einlagerstrecke über die Fördereinrichtung des Lastaufnahmemittels auf die Auslagerstrecke transportiert.

Weitere vorteilhafte Merkmale der Erfindung ergeben sich aus den übrigen Unteransprüchen sowie aus der nachfolgenden Beschreibung, in der mehrere bevorzugte Ausführungsbeispiele der Erfindung anhand der Zeichnung näher erläutert werden. In der Zeichnung zeigen in halbschematischer bzw. schematischer Darstellung:
Figur 1 eine Draufsicht auf eine erfindungsgemäße Kommissionieranlage,
Figur 2 eine Seitenansicht einer erfindungsgemäßen Kommissionieranlage gemäß Figur 1,
Figur 3 eine Seitensicht eines der in der Anlage gemäß Figuren 1 und 2 verwendeten Sortierpuffers,
Figur 4 eine Draufsicht auf den Sortierpuffer gemäß Figur 3, und
Figuren 5A bis 5E verschiedene Betriebszustände des Lastaufnahmemittels des Sortierpuffers gemäß Figur 3.

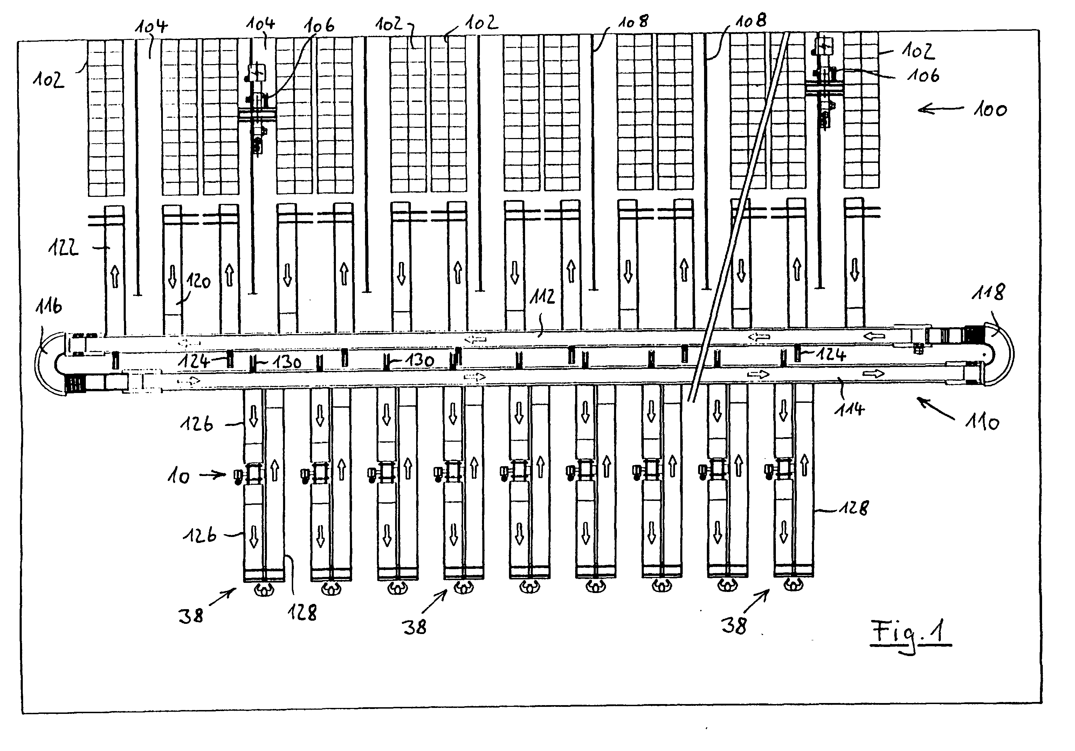

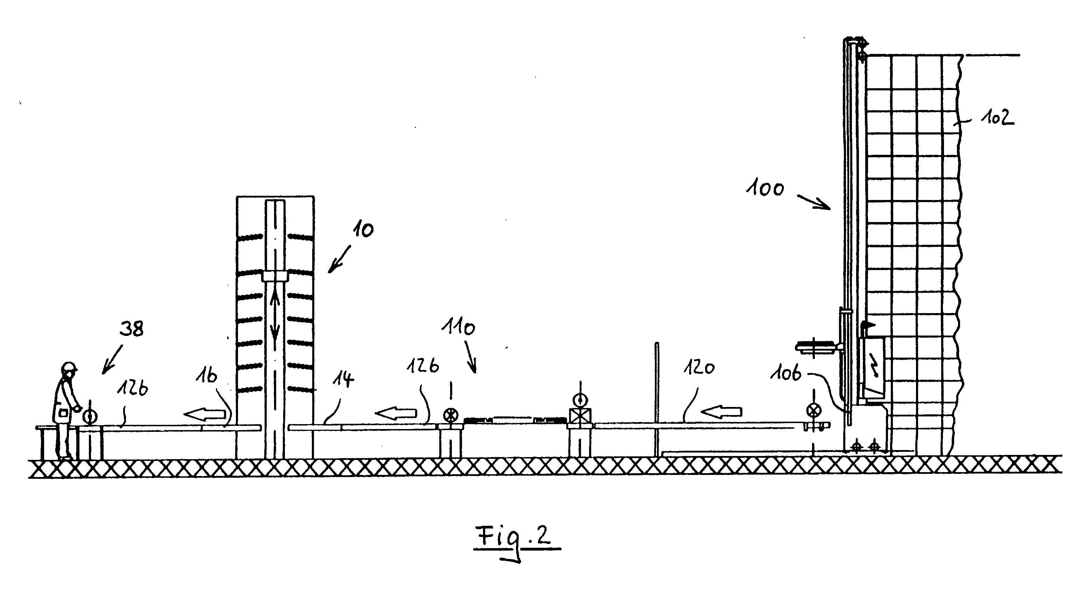

Die in den Figuren 1 und 2 dargestellte Kommissionieranlage umfaßt ein insgesamt mit der Bezugsziffer 100 bezeichnetes Behälterlager (Kleinteilelager) mit Lagerregalen 102, die zwischen sich Regalgassen 104 bilden, in denen Regalfahrzeuge 106 auf Schienen 108 zum Be- und Entladen der Lagerregale verfahrbar sind. Obwohl in Figur 1 nur zwei Regalfahrzeuge 106 dargestellt sind, versteht es sich, daß in jeder Regalgasse 104 ein Regalfahrzeug 106 vorgesehen ist. In den einzelnen Fächern der Lagerregale 102 werden die (in Figuren 1 und 2 nicht dargestellten) Transportbehälter 26 doppelt-tief gelagert. Jedes Regalfahrzeug 106 bedient zwei gegenüberliegende Lagerregale 102.

Dem Behälterlager 100 vorgelagert ist ein insgesamt mit der Bezugsziffer 110 bezeichnetes Verteilsystem, das als umlaufendes Transportsystem mit zwei parallelen, in entgegengesetzte Richtungen transportierenden, geradlinigen Bahnabschnitten 112, 114 und zwei diese geradlinigen Bahnabschnitte endseitig verbindenden, halbkreisförmigen Bahnabschnitten 116, 118 ausgebildet ist. Mit den Bezugsziffern 120, 122 sind die einer jeden Regalgasse 104 bzw. einem jeden Regalfahrzeug 106 zugeordneten Auslagerbahnen bzw. Einlagerbahnen bezeichnet, über die die vom jeweiligen Regalfahrzeug 106 dem Behälterlager entnommenen Behälter dem Verteilsystem 110 zugeführt werden bzw. die von den Arbeitsplätzen über das Verteilsystem 110 dem Behälterlager zurückzuführenden Behälter vom Verteilsystem 110 zu den Regalfahrzeugen 106 transportiert werden. Mit der Bezugsziffer 124 sind Ausschleusvorrichtungen bezeichnet, über die die auf dem Bahnabschnitt 112 des Verteilsystems 110 transportierten Behälter auf die jeweils gewünschte Einlagerbahn 122 ausgeschleust werden.

Auf der dem Behälterlager 100 gegenüberliegenden Seite des Verteilsystems 110 sind eine Anzahl von Kommissionier-Arbeitsplätzen 38 vorgesehen, die über Transportbahnen 126, 128 mit dem Verteilsystem 110 verbunden sind. Die Transportbahnen 126 dienen zum Zuführen von Behältern zum jeweiligen Arbeitsplatz 38, wobei am Bahnabschnitt 114 des Verteilsystems 110, der jeweiligen Transportbahn 126 gegenüberliegend, jeweils eine Ausschleusvorrichtung 130 zum Ausschleusen der gewünschten Behälter vom Verteilsystem auf die Transportbahn 126 angeordnet ist. Die zur jeweiligen Transportbahn 126 parallel verlaufende Transportbahn 128 dient zum Rücktransport der teilweise oder vollständig entleerten Behälter vom Arbeitsplatz 38 zum Verteilsystem 110. Gegebenenfalls kann jedem Arbeitsplatz 38 zusätzlich noch eine (nicht dargestellte) dritte, zu den beiden Transportbahnen 126, 128 parallel verlaufende Transportbahn zugeordnet sein, die zum Zuführen von leeren Behältern vom Verteilsystem 110 zum Arbeitsplatz 38 dient.

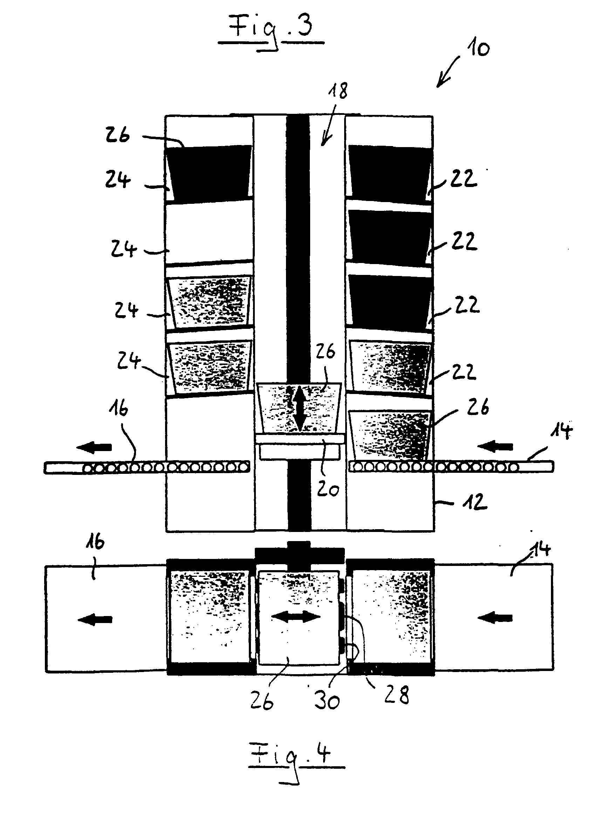

In den Weg einer jeden Transportbahn 126 ist ein insgesamt mit der Bezugsziffer 10 bezeichneter Sortierpuffer eingeschaltet, der im folgenden anhand der Figuren 3 bis 5 näher erläutert wird.

Der Sortierpuffer 10 umfaßt einen Rahmen 12, an dessen einer Seite eine mit der Bezugsziffer 14 bezeichnete horizontale Einlagerstrecke und an dessen gegenüberliegender Seite eine mit der Bezugsziffer 16 bezeichnete Auslagerstrecke angeordnet ist. Die Einlagerstrecke 14 wie auch die Auslagerstrecke 16 besteht im wesentlichen jeweils aus einer angetriebenen Rollenbahn mit Staufunktion. An die Einlagerstrecke schließt derjenige Teil der Transportbahn 126, der zum Verteilsystem 110 führt, an, und an die Auslagerstrecke schließt derjenige Teil der Transportbahn 126 an, der zum Arbeitsplatz 38 führt.

Zwischen der Einlagerstrecke 14 und der Auslagerstrecke 16 ist eine insgesamt mit Bezugsziffer 18 bezeichnete Bedieneinheit angeordnet, welche ein Lastaufnahmemittel 20 umfaßt, welches entlang einer vertikalen Führung über einen nicht näher dargestellten Hubantrieb an sich bekannter Art in vertikaler Richtung bewegt werden kann, wie durch den Doppelpfeil angedeutet.

Beidseitig der Bedieneinheit 18 und oberhalb der Einlagerstrecke 14 bzw. der Auslagerstrecke 16 sind jeweils eine Anzahl von übereinander angeordneten Stellplätzen 22, 24 angeordnet, die zur Aufnahme je eines Behälters 26 dienen. Im Falle des vorliegenden Ausführungsbeispiels sind insgesamt acht Stellplätze vorgesehen, die Anzahl der Stellplätze kann jedoch je nach Bedarf beliebig nach oben oder unten variiert werden.

Die über die Einlagerstrecke ankommenden Behälter 26 gelangen auf das Lastaufnahmemittel 20, das sich in unterster Position befindet, wo es bündig mit der Einlagerstrecke (und der Auslagerstrecke) ist, und die einzelnen Behälter werden dann über das Lastaufnahmemittel 20 zu jeweils freien Stellplätzen gebracht und in diesen Stellplätzen zwischengelagert. Umgekehrt werden die auszulagernden Behälter 26 vom Lastaufnahmemittel 20 der Bedieneinheit 18 übernommen und zur Auslagerstrecke 16 gefördert.

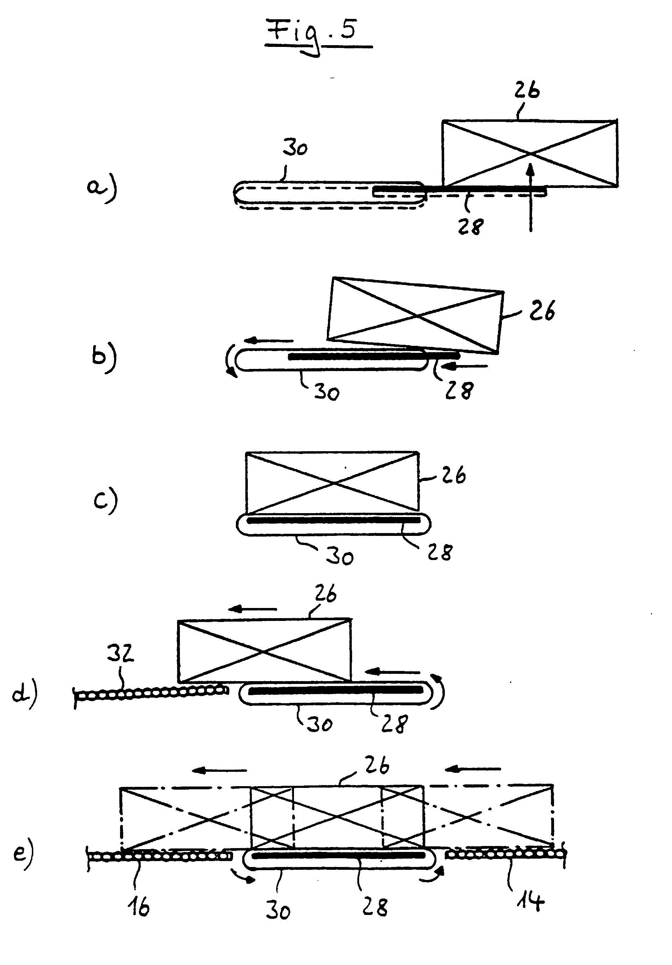

Das Lastaufnahmemittel 20 umaßt eine Teleskopplattform 28, die in horizontaler Richtung ausfahrbar ist, sowie einen Riemenförderer 30, der in beiden Drehrichtungen antreibbar ist. Die Böden der Stellplätze 22, 24 sind, wie insbesondere aus Fig. 3 ersichtlich, geneigt und weisen beidseitig je eine Röllchenleiste 32 auf, vgl. Fig. 5d, auf der die über das Lastaufnahmemittel 20 dem jeweiligen Stellplatz zugeführten Behälter 26 selbsttätig in ihre Speicherposition rollen, bis sie an einem nicht näher dargestellten Fachanschlag anschlagen.

Die Funktion des vorstehend beschriebenen Sortierpuffers ist wie folgt: Die über die Einlagerstrecke 14 ankommenden Behälter werden über den Riemenförderer 30 auf das in seiner unteren Grundposition befindliche Lastaufnahmemittel 20 der Bedieneinheit 18 übernommen, vgl. Fig. 5e. Anschließend wird das Lastaufnahmemittel nach oben bewegt, bis der Behälter einem von der (nicht dargestellten) Systemssteuerung ausgewählten freien Stellplatz gegenüberliegt. Der Behälter wird sodann durch Abfördern mit dem Riemenförderer 30 des Lastaufnahmemittel 20, ohne jeglichen Relativ-Hub der Bedieneinheit, auf den Stellplatz eingelagert, wobei der Behälter aufgrund der Neigung der Röllchenleisten 32 im zweiten Abschnitt seiner Einlagerbewegung selbsttätig in seine Sollposition rollt, vgl. Fig. 5d.

Zur Auslagerung eines über die Systemsteuerung ausgewählten Behälters wird das Lastaufnahmemittel 20 in die dem jeweiligen Stellplatz gegenüberliegende Position gebracht. Anschließend wird die Teleskopplattform 28 des Lastaufnahmemittel 20 unter die entsprechende Transporteinheit positioniert; durch einen Relativ-Hub des Lastaufnahmemittel wird der Behälter geringfügig angehoben. Diese Situation zeigt Fig. 5a, wobei die Ausgangsstellung gestrichelt und die Endstellung durchgezogen dargestellt ist. Durch Einfahren der Teleskopplattform 28 wird der Behälter aus dem Stellplatz entnommen und dem Riemenförderer 30 zugeführt, vgl. Fig. 5b, der dann die vollständige Auslagerung des Behälters auf das Lastaufnahmemittel 20 durchführt, vgl. 5c.

Anschließend wird das Lastaufnahmemittel 20 wieder in seine unterste Position verfahren, vgl. Fig. 5e, wo der Behälter mittels des Riemenförderer 30 an die Auslagerstrecke 16 abgegeben wird.

Es sei darauf hingewiesen, daß in der Praxis zunächst alle relevanten Behälter (Transporteinheiten) eines Auftrages im Sortierpuffer 10 eingelagert werden und daß anschließend die folgerichtige Auslagerung der entsprechenden Behälter und Übergabe auf die Auslagerstrecke erfolgt. Über die Auslagerstrecke werden die Behälter dann dem jeweiligen Arbeitsplatz zugeführt. Die Verwaltung und Optimierung des Sortierpuffers übernimmt hierbei ein geeignetes, nicht näher dargestelltes Steuerungssystem.

Wird ein Behälter für einen Auftrag sofort benötigt, so kann auf eine Zwischenpufferung im Sortierpuffer verzichtet werden. Das Lastaufnahmemittel 20 der Bedieneinheit 18 befindet sich in diesem Fall in ihrer in Fig. 5e dargestellten untersten Position und dient als überbrückende Förderstrecke zwischen Einlagerstrecke 14 und Auslagerstrecke 16; der Behälter wird somit von der Einlagerstrecke über den Riemenförderer 30 des Lastaufnahmemittel 20 auf die Auslagerstrecke 16 transportiert.

Nachdem die Reihenfolge der Zuführung der Behälter zum jeweiligen Arbeitsplatz somit individuell für jeden Arbeitsplatz in dem jeweiligen Sortierpuffer 10 erstellt werden kann, kann die Reihenfolge, in der die Regalfahrzeuge 106 die Behälter dem Behälterlager 100 entnehmen und dem Verteilsystem 110 zuführen, im wesentlichen beliebig sein. Dementsprechend wird der Betrieb der Regalfahrzeuge 106 so gesteuert, daß die Auslagerung der Behälter aus dem Behälterlager hinsichtlich der Auslagerleistung maximiert wird, gegebenenfalls unter Berücksichtigung weiterer Parameter wie beispielsweise der Einlagerung zurückgeführter Behälter. Auch muß das Verteilsystem 110 keinerlei Sortierfunktion, sondern lediglich eine Verteilfunktion übernehmen und kann somit entlastet werden.

### Bezugszeichenliste

- 10: Sortierpuffer
- 12: Rahmen
- 14: Einlagerstrecke
- 16: Auslagerstrecke
- 18: Bedieneinheit
- 20: Lastaufnahmemittel
- 22: Stellplätze
- 24: Stellplätze
- 26: Behälter
- 28: Teleskopplattform
- 30: Riemenförderer
- 32: Röllchenleiste
- 38: Arbeitsplatz
- 100: Behälterlager
- 102: Lagerregale
- 104: Regalgassen
- 106: Regalfahrzeuge
- 108: Schienen
- 110: Verteilsystem
- 112: geradliniger Bahnabschnitt
- 114: geradliniger Bahnabschnitt
- 116: halbkreisförmiger Bahnabschnitt
- 118: halbkreisförmiger Bahnabschnitt
- 120: Auslagerbahnen
- 122: Einlagerbahnen
- 124: Ausschleusvorrichtungen
- 126: Transportbahnen
- 128: Transportbahnen
- 130: Ausschleusvorrichtung

## Patentansprüche

1. Verfahren zum Kommissionieren in einer Komissionieranlage mit einem Behälterlager (100), mit Fördereinrichtungen (106) zum Transport der Behälter (26) aus dem Behälterlager (100) zu einer Mehrzahl von Kommissionier-Arbeitsplätzen (38), und mit einem zwischen dem Behälterlager und den Arbeitsplätzen vorgesehenen Verteilsystem (110) zum Verteilen der Behälter (26) auf die einzelnen Arbeitsplätze (38), wobei die Behälter (26) aus dem Behälterlager (100) hinsichtlich ihrer späteren, an den Arbeitsplätzen (38) benötigten Reihenfolge ungeordnet ausgelagert werden, in einem Sortierpuffer (10) zwischengelagert und hinsichtlich ihrer für den jeweiligen Arbeitsplatz vorgesehenen Reihenfolge sortiert aus dem Sortierpuffer (10) ausgegeben werden, **dadurch gekennzeichnet,**
**daß** die Behälter (26) in dem Sortierpuffer (10) auf mehreren, vertikal übereinander angeordneten ortsfesten Stellplätzen mittels eines Vertikalbediengeräts (18) zwischenlagerbar sind, welches Vertikalbediengerät (18) in einer Grundposition ein Teilstück des Transportweges (126) der Behälter (26) zwischen Verteilsystem (110) und Arbeitsplätzen (38) bildet.

2. Verfahren nach Anspruch 1, **dadurch gekennzeichnet, daß** die Auslagerung der Behälter (26) aus dem Behälterlager (100) hinsichtlich der Auslagerleistung maximiert wird.

3. Kommissionieranlage mit einem Behälterlager (100) mit Fördereinrichtungen (106) zum Transport der Behälter (26) aus dem Behälterlager zu einer Mehrzahl von Kommissionier-Arbeitsplätzen (38), und mit einem zwischen dem Behälterlager (100) und den Arbeitsplätzen (38) vorgesehenen Verteilsystem (110) zum Verteilen der Behälter auf die einzelnen Arbeitsplätze, wobei in den zwischen dem Verteilsystem (110) und den Arbeitsplätzen (38) vorhandenen Transportwegen (126) jeweils ein Sortierpuffer (10) angeordnet ist, **dadurch gekennzeichnet,**
**daß** die Sortierpuffer jeweils mehrere, vertikal übereinander angeordnete, ortsfeste Stellplätze (22) zum Zwischenlagern der Behälter (26) aufweisen, die mittels eines Vertikalbediengeräts (18) bedienbar sind, welches in einer Grundposition ein Teilstück des Transportweges (126) zwischen Verteilsystem (110) und Arbeitsplätzen (38) bildet.

4. Kommissionieranlage nach Anspruch 3, aufweisend Mittel zur Steuerung des Sortierpuffers.

5. Kommissionieranlage nach Anspruch 3 oder 4, **dadurch gekennzeichnet, daß** die Stellplätze (22, 24) in zwei sich gegenüberstehenden Türmen übereinander angeordnet sind.

6. Kommissionieranlage nach einem der Ansprüche 3 bis 5, **dadurch gekennzeichnet, daß** das Vertikalbediengerät (18) ein vertikal bewegliches Lastaufnahmemittel (20) umfaßt.

7. Kommissionieranlage nach einem der Ansprüche 3 bis 6, **dadurch gekennzeichnet, daß** die Stellflächen der Stellplätze (22, 24) von der Vertikalbedieneinheit (18) weggeneigt sind und einen Anschlag für die Endposition der Behälter aufweisen.

8. Kommissionieranlage nach Anspruch 7, **dadurch gekennzeichnet, daß** die Stellflächen der Stellplätze (22, 24) mit Rollen oder dergleichen, insbesondere mit zwei gegenüberliegenden Röllchenleisten (32) versehen sind.

## Claims

1. Method for order picking in an order picking installation having a container store (100), having conveying devices (106) for transporting the containers (26) from the container store (100) to a plurality of order picking workstations (38), and having a distribution system (110) provided between the container store and the workstations and serving to distribute the containers (26) to the individual workstations (38), the containers (26) being retrieved from the container store (100) disordered with regard to their subsequent order required at the workstations (38), temporarily stored in a sorting buffer (10) and output from the sorting buffer (10) sorted with regard to their order intended for the respective workstation, **characterised in that** the containers (26) can be temporarily stored in the sorting buffer (10) in a plurality of stationary depositing places arranged vertically one above the other by means of a vertical storage and retrieval device (18), which vertical storage and retrieval device (18) forms in a normal position a section of the transporting path (126) of the containers (26) between the distribution system (110) and the workstations (38).

2. Method according to Claim 1, **characterised in that** the retrieval of the containers (26) from the container store (100) is maximised with regard to the retrieval capacity.

3. Order picking installation having a container store (100), having conveying devices (106) for transporting the containers (26) from the container store to a plurality of order picking workstations (38), and having a distribution system (110) provided between the container store (100) and the workstations (38) and serving to distribute the containers to the individual workstations, a sorting buffer (10) being arranged in each of the transporting paths (126) present between the distribution system (110) and the workstations (38), **characterised in that** the sorting buffers each have a plurality of stationary depositing places (22) arranged vertically one above the other and serving for the temporary storage of the containers (26), and these can be served by means of a vertical storage and retrieval device (18), which forms in a normal position a section of the transporting path (126) between the distribution system (110) and the workstations (38).

4. Order picking installation according to Claim 3, having means for controlling the sorting buffer.

5. Order picking installation according to Claim 3 or 4, **characterised in that** the depositing places (22, 24) are arranged one above the other in two mutually opposite towers.

6. Order picking installation according to one of Claims 3 to 5, **characterised in that** the vertical storage and retrieval device (18) comprises a vertically movable load-receiving means (20).

7. Order picking installation according to one of Claims 3 to 6, **characterised in that** the depositing surfaces of the depositing places (22, 24) are inclined away from the vertical storage and retrieval unit (18) and have a stop for the end position of the containers.

8. Order picking installation according to Claim 7, **characterised in that** the depositing surfaces of the depositing places (22, 24) are provided with rollers or the like, in particular with two opposite small-roller strips (32).

## Revendications

1. Procédé de préparation de commandes dans une installation de préparation de commandes, comprenant un magasin à récipients (100), avec des dispositifs transporteurs (106) pour le transport des récipients (26) depuis le magasin à récipients (100) jusqu'à une pluralité de postes de travail de préparateurs de commandes (38), et un système de distribution (110), prévu entre le magasin à récipients et les postes de travail, afin de répartir les récipients (26) aux différents postes de travail (38), les récipients (26) étant destockés du magasin à récipients (100) selon leur ordre de succession ultérieur, nécessaire aux postes de travail (38) mis en stockage intermédiaire dans un tampon de tri (10), et étant sortis du tampon de tri (10) de façon assortie à leur ordre de succession prévu pour le poste de travail spécifique, **caractérisé en ce que** les récipients (26) sont susceptibles d'être mis en stockage intermédiaire dans le tampon de tri (10) sur une pluralité d'emplacements de placement fixes disposés verticalement les uns au-dessus des autres, à l'aide d'un appareil de desserte verticale (18), ledit appareil de desserte verticale (18) formant, en une position de base, un élément partiel du chemin de transport (126) des récipients (26), entre le système de distribution (110) et les postes de travail (38).

2. Procédé selon la revendication 1, **caractérisé en ce que** le destockage des récipients (26) du magasin à récipients (100) est fait en visant une performance de déstockage maximale.

3. Installation de préparation de commandes avec un magasin à récipients (100), avec des dispositifs de transport (106) pour le transport des récipients (26) depuis le magasin à récipients jusqu'à une pluralité de postes de travail de préparateurs de commandes (38), et avec un système de distribution (110), prévu entre le magasin à récipients (100) et les postes de travail (38), pour répartir les récipients aux différents postes de travail, sachant un tampon de tri (10) est disposé dans chacune des voies de transport (126) existant entre le système de distribution (110) et les postes de travail (38), **caractérisé en ce que** les tampons de tri présentent chacun une pluralité d'emplacements de placement (22) fixes, disposés verticalement les uns au-dessus des autres, pour effectuer un stockage intermédiaire des récipients (26), qui peuvent être desservis à l'aide d'un appareil de desserte verticale (18) qui, en une position de base, forme un élément partiel du chemin de transport (126) entre le système de distribution (110) et les postes de travail (38).

4. Installation de préparation de commandes selon la revendication 3 présentant des moyens pour commander le tampon de tri.

5. Installation de préparation de commandes selon l'une des revendications 3 ou 4, **caractérisée en ce que** les emplacements de placement (22, 24) sont disposés les uns au-dessus les autres en deux tours se faisant face.

6. Installation de préparation de commandes selon l'une des revendications 3 à 4, **caractérisée en ce que** l'appareil de desserte verticale (18) comprend un moyen de support de charge (20) mobile verticalement.

7. Installation de préparation de commandes selon l'une des revendications 3 à 6, **caractérisée en ce que** les faces de placement des emplacements de placement (22, 24) sont inclinées à l'opposé de l'unité de desserte verticale (18) et présentent une butée pour la position finale des récipients.

8. Installation de préparation de commandes selon la revendication 7, **caractérisée en ce que** les faces de placement des emplacements de placement (22, 24) sont munies de rouleaux ou analogues, en particulier avec deux bandes à petits galets (32) se faisant face.
